# EUROPEAN PATENT APPLICATION

(11) **EP 3 090 855 A1**
(43) Date of publication of application: **09.11.2016**
(21) Application number: 15176366.1
(22) Date of filing: 10.07.2015
(51) Int. Cl.: B29C 45/73, B29C 35/16

(54) **METHOD FOR COOLING A MOLD OR AREAS THEREOF**

(30) Priority: 04.05.2015 US 201514703235
(71) Applicant: Linde Aktiengesellschaft, 80331 München (DE)
(72) Inventor: Hershkowitz, Matthew, West Caldwell, NJ New Jersey 07006 (US); Orsén, Mikael, Chatham Township, NJ New Jersey 07928 (US)
(74) Representative: Hofmann, Andreas

(57) **Abstract**

In order to overcome the limitations and problems that earlier methods for producing plastic parts have experienced, a method for cooling, in particular at least one area of, a mold used for producing plastic parts or in the production of plastic parts is proposed, said method comprising directing carbon dioxide (CO₂) at the surface of the mold.

## Description

### Technical field of the present invention

The present invention relates to the technical field of producing plastic parts.

### Technological background of the present invention

During the injection molding process, it is often found that due to ineffective cooling by water or other cooling methods and a lack of heat dissipation by the molding tool that areas of the mold are much hotter ("hot spots") than the remainder of the mold.

Consequently, the cooling time, and subsequently the molding cycle time, is extended to allow the plastic to cool and solidify more before being removed. The cooling time is the time between when the plastic is completely injected into the mold and when the mold is opened.

### Disclosure of the present invention: object, solution, advantages

Starting from the disadvantages and shortcomings as described above as well as taking the prior art as discussed into account, an object of the present invention is to overcome the limitations and problems that earlier methods for producing plastic parts have experienced.

This object is accomplished by a method comprising the features of claim 1. Advantageous embodiments and expedient improvements of the present invention are disclosed in the dependent claims.

When a plastic part is produced in a mold, given the intricacy of the part and the mold, the areas of the mold will cool down at different rates. As noted above, this can cause problems with the finished plastic part. It is therefore desirable to provide cooling to those areas of the mold that are at higher temperatures rather than allowing these hotter areas to cool naturally which lengthens the overall molding cycle time.

Therefore, the present invention basically provides for a method for improved cooling, in particular improved spray cooling, of plastics.

More particularly, the present invention discloses a method for cooling, in particular at least one area of, a mold used for producing plastic parts or in the production of plastic parts, said method comprising directing carbon dioxide (CO₂) at the surface of the mold to be cooled. This cooling shortens the cycle time for producing the plastic parts thereby increasing throughput and cost savings.

In a first embodiment of the present invention, there is disclosed a method for cooling a mold used in the production of plastic parts comprising directing carbon dioxide (CO₂) at the surface of the mold cavity.

In a different embodiment of the present invention, there is disclosed a method for cooling at least one area of a mold used for producing plastic parts wherein the area(s) to be cooled is (are) at a higher temperature than other areas of the mold comprising directing carbon dioxide (CO₂) at the surface of the mold to be cooled.

The carbon dioxide (CO₂) may preferably be directed at the, in particular external, surface of the mold cavity.

The carbon dioxide (CO₂) may preferably be directed at at least one area of the mold cavity that is higher in temperature than other areas of the mold.

The higher temperature area(s) may preferably be located using a device selected from the group consisting of a temperature probe, an infrared measurement device or a similar device.

The carbon dioxide (CO₂) may preferably be directed at the mold through a nozzle. The nozzle may preferably create a mixture of carbon dioxide (CO₂) gas and snow.

The production of the plastic parts may preferably be by injection molding, i. e. according to the injection molding method, wherein a molding tool is closed to form a cavity in the interior of the molding tool, a plastic melt is injected into the cavity and allowed to cool and solidify, the molding tool opens and the part is removed.

The time required to complete a full cycle of the above-described process is the molding cycle time.

The mold is typically those molds used for the injection molding of plastic parts. These molds generally comprise two large blocks of steel with half of the cavity removed from each side. The mold also has water cooling channels, pins to eject the part, lifters, kickers and a runner system to inject plastic.

The plastic parts may preferably be selected from the group consisting of poly propylene with or without glass reinforcement, polyamides with or without glass reinforcement, acryl-butadiene-styrene, poly carbonates and mixtures thereof.

The carbon dioxide (CO₂) may preferably be directed at the mold, in particular at the mold cavity surface, after the plastic part is formed.

The carbon dioxide (CO₂) may preferably be delivered at a pressure of 800 p[ounds per ]s[quare ]i[nch] (5.516 megapascal) to 1000 p[ounds per ]s[quare ]i[nch] (6.895 megapascal).

The carbon dioxide (CO₂) may preferably be at a temperature of -109°F (-78.3°C).

The cooling time may preferably range from one second to 600 seconds, more preferably from ten seconds to 300 seconds, in length.

The present invention has the ability to target at least one specific area of a mold that is at a higher temperature and by directing the stream of carbon dioxide (CO₂) at this hotter area(s), cool it (them) down thereby equalizing the temperature of the overall mold and shortening the cycle time for the production of plastic parts.

In the present invention, it has been found that by using carbon dioxide (CO₂) cooling the above-discussed hot spots can be significantly reduced, thereby enabling the cooling time to be reduced and resulting in an overall reduction in molding cycle time. The reduction in molding cycle time directly correlates to an increase in throughput or a reduction in cost.

### Best way of embodying the present invention

In a typical injection molding operation according to the present invention a series of steps is followed in producing the plastic part.

First the mold is closed and hot enough to allow for the plastic to flow throughout the cavity; melted plastic is injected at pressure into the cavity of the mold. The mold will then sit for a time period during which the plastic cools and solidifies.

During this cooling period, the heat from the plastic is absorbed into the steel mold. Plastics have poor heat transmission capability, and therefore hotter areas of the mold reduce the temperature differential and make the cooling rate slower.

Once cooled, the mold opens and a robot or person removes the part from the mold. The plastic part may also just come off easily from the mold and slide into a collection bin when the mold is opened.

The carbon dioxide (CO₂) will be directed to areas of the mold that do not readily disperse the heat absorbed from the plastic. This application of the carbon dioxide (CO₂) will reduce the cooling time of the plastic.

As a result, the total molding cycle time can be reduced as cooling time can represent twenty percent to ninety percent of the cycle time depending upon the plastic part and the cycle time itself. The lower percentage cycle time are normally when the cycle time is below thirty seconds in length and the higher percentages are more when the cycle time is over 300 seconds in length.

Liquid carbon dioxide (CO₂) is supplied at a pressure of 800 p[ounds per ]s[quare ]i[nch] (5.516 megapascal) to 1000 p[ounds per ]s[quare ]i[nch] (6.895 megapascal) to a nozzle. Typical nozzles that may be employed are LINSPRAY^{®} nozzles available from Linde AG and described in prior art document EP 0 546 359 A1.

The carbon dioxide (CO₂) supply may be from either liquid carbon dioxide (CO₂) cylinders with a siphon (dip) tube or from a bulk carbon dioxide (CO₂) tank depending upon the amount of carbon dioxide (CO₂) necessary for cooling purposes. If the liquid carbon dioxide (CO₂) is from a bulk tank, a pressure boosting unit must be employed to increase the pressure to 900 p[ounds per]s[quare ]i[nch] (6.2055 megapascal) to 1000 p[ounds per ]s[quare ]i[nch] (6.895 megapascal).

The liquid carbon dioxide (CO₂) flows through stainless steel hoses to the LINSPRAY^{®} solenoid valves which are controlled by a 24V D[irect]C[urrent] signal. These valves may be triggered manually or automatically through the use of a programmable logic control (PLC) device.

When the valves are opened by the signal, liquid carbon dioxide (CO₂) flows through the LINSPRAY^{®} nozzles and forms a carbon dioxide (CO₂) snow and gas at -109°F (-78.3°C) in a concentrated jet.

This jet targets specific areas of the mold to effectively cool down that area and equalize the temperature throughout the mold. By equalizing the temperature throughout the mold, the cooling time can be reduced thereby resulting in an overall reduction in molding cycle time.

The nozzles may have fine filters placed over their ends to ensure long operation as well as the appropriate pollution control. The nozzles per the LINSPRAY^{®} process have a pre-chamber at the mouth end in which the liquid carbon dioxide (CO₂) is expanded via a calibrated slit nozzle.

This design is useful in the methods of the present invention in that the pre-chamber efficiently allows the carbon dioxide (CO₂) to completely expand thereby maximizing its cooling efficiency when directed to the hot spots to be treated.

While the present invention has been described with respect to particular embodiments thereof, it is apparent that numerous other forms and modifications of the present invention will be obvious to those skilled in the art. The appended claims in the present invention generally should be construed to cover all such obvious forms and modifications which are within the true spirit and scope of the present invention.

## Claims

1. A method for cooling, in particular at least one area of, a mold used for producing plastic parts or in the production of plastic parts, said method comprising directing carbon dioxide (CO₂) at the surface of the mold.

2. The method according to claim 1, wherein the at least one area to be cooled is at a higher temperature than other areas of the mold.

3. The method according to claim 1 or 2, wherein the carbon dioxide (CO₂) is directed at the at least one area of the mold that is higher in temperature than other areas of the mold.

4. The method according to claim 2 or 3, wherein the at least one higher temperature area is located using a device selected from the group consisting of a temperature probe and an infrared measurement device.

5. The method according to at least one of claims 1 to 4, wherein the carbon dioxide (CO₂) is directed at the surface of the mold cavity.

6. The method according to at least one of claims 1 to 5, wherein the carbon dioxide (CO₂) is directed at the external surface of the mold.

7. The method according to at least one of claims 1 to 6, wherein the carbon dioxide (CO₂) is directed at the mold after the plastic part is formed.

8. The method according to at least one of claims 1 to 7, wherein the carbon dioxide (CO₂) is directed at the mold through at least one nozzle.

9. The method according to claim 8, wherein the nozzle creates a mixture of carbon dioxide (CO₂) gas and snow.

10. The method according to at least one of claims 1 to 9, wherein the production of plastic parts is by injection molding.

11. The method according to at least one of claims 1 to 10, wherein the plastic parts are selected from the group consisting of poly propylene with or without glass reinforcement, polyamides with or without glass reinforcement, acryl-butadiene-styrene, poly carbonates and mixtures thereof.

12. The method according to at least one of claims 1 to 11, wherein the cooling ranges from one second to 600 seconds in length.

13. The method according to claim 12, wherein the cooling ranges from ten seconds to 300 seconds in length.

14. The method according to at least one of claims 1 to 13, wherein the carbon dioxide (CO₂) is delivered at a pressure of 800 p[ounds per ]s[quare ]i[nch] (5.516 megapascal) to 1000 p[ounds per ]s[quare ]i[nch] (6.895 megapascal).

15. The method according to at least one of claims 1 to 14, wherein the carbon dioxide (CO₂) is at a temperature of -109°F (-78.3°C).
